# EUROPEAN PATENT SPECIFICATION

(11) **EP 2 689 149 B1**
(45) Date of publication and mention of the grant of the patent: **03.05.2017**
(21) Application number: 12713497.1
(22) Date of filing: 22.03.2012
(51) Int. Cl.: F16B 19/05, F16B 33/00, F16B 43/00

(54) **HYBRID COLLAR FOR FASTENING SYSTEMS**
GESTAUCHTEN HYBRID-KRAGEN FÜR BEFESTIGUNGSSYSTEM
MOYEN DE FIXATION À COLLERETTE HYBRIDE

(30) Priority: 24.03.2011 US 201161467002 P
(43) Date of publication of application: 29.01.2014
(73) Proprietor: Arconic Inc., Pittsburgh, PA 15212 (US)
(72) Inventor: HAYLOCK, Luke, Culver City, CA 90230 (US); MULAZIMOGLU, Hasim, Buena Park, CA 90621 (US); PINHEIRO, Rodrigo, Riverside, CA 92505 (US)
(74) Representative: Trinks, Ole
(86) International application number: PCT/US2012/030099
(87) International publication number: WO 2012/129390

(56) References cited:
- DE-A1- 19 725 329
- GB-A- 1 331 460
- US-A- 4 348 140
- US-A1- 2004 234 358

## Description

### Technical Field of the Invention

The present invention relates to a collar for a fastening system and, more particularly, a hybrid collar for protection from galvanic corrosion between the collar and a structure.

### Background Art

The use of composite materials, such as carbon fiber reinforced plastics (CFRP), is becoming more common in the aerospace industry as advancements on composite technologies increase. A significant portion of a composite structure is fabricated as near net-shape, but it is drilled in order to facilitate the joining of components by using mechanical fasteners. One of the most essential criteria for choosing fasteners for aircraft structures is the galvanic corrosion compatibility between the fasteners and the joined components.

US 2004/0234358 A1 relates to a fastener assembly comprising a metal nut having an integral flange and a metal cup washer rotatably mounted on the flange, with an outer disc surface of the flange adjacent to an inner disc surface of the washer, and with portions of a side wall of the washer overlying the flange to hold the washer captive on the flange. An outer disc surface of the washer, which engages a surface of a workpiece, has a plurality of grooves extending transversely to the circumference of the outer disc surface. The entire fastener assembly is coated, as a unit, with an anti-corrosive lubricant.

GB 1 331 460 relates to preassembled fastener units for high-performance adjusted joints.

US 4,348,140 A relates to a connecting device for joining sheet metal components. The connecting device has a layer of synthetic material at least in the area of the contact surfaces with neighboring components thus effectively preventing contact corrosion.

### Disclosure of the Invention

The invention relates to a collar for a fastening system according to the features of claim 1. In an embodiment, the first material is selected from the group consisting of aluminum and aluminum alloys. In an embodiment, the second material is selected from the group consisting of steel, steel alloys, titanium, and titanium alloys.

In an embodiment, the securing portion of the base element is crimped on the flange of the collar body. In an embodiment, the collar body includes an aperture extending from the first end to the second thereof and forming an inner wall, and wherein the base element includes a sealing portion that extends into the aperture of the collar body and covers a portion of the inner wall. In an embodiment, the base element includes a swivel base element that is adapted to rotate relative to the collar body. In an embodiment, the collar is adapted to be installed on a structure made of a composite material.

In an embodiment, the collar has a coating that includes an organic material and a non-conductive filler. In an embodiment, the organic material is a polymer material, and the non-conductive filler is selected from the group consisting of aluminum pigmented paint, chromated paint, and sol-gel coatings. In an embodiment, the coating is applied to every portion of the collar body. In an embodiment, the coating is be applied on the collar body selectively.

In an embodiment, the collar is a threaded collar. In another embodiment, the collar is a swage collar.

In an embodiment, a collar body having a first end and a second end opposite the first end, the collar body being made from a first material; and a flange located at the second end of the collar body, the flange being made from a second material that is galvanically compatible with the first material. In an embodiment, the collar body and the flange are formed integrally with one another. In an embodiment, the first material is selected from the group consisting of aluminum and aluminum alloys. In an embodiment, the second material is selected from the group consisting of steel, steel alloys, titanium, and titanium alloys.

### Brief Description of the Drawings

For a more complete understanding of the present invention, reference is made to the following detailed description of exemplary embodiments considered in conjunction with the accompanying drawings, in which:
**FIG. 1** is a cross-sectional view of an embodiment of a lockbolt fastener system;
**FIG. 2A** is a partially sectioned perspective view of an embodiment of a hybrid collar adapted for use in the fastener system shown in **FIG. 1**, the collar including a flat base element;
**FIG. 2B** is a partially sectioned perspective view of another embodiment of a hybrid collar including a ridge base element;
**FIG. 2C** is a partially sectioned perspective view of another embodiment of a hybrid collar including a swivel base element;
**FIG. 2D** is a partially sectioned perspective view of another embodiment of a hybrid collar including an integrally formed flange;
**FIG. 3** is a graph showing a comparison of specific tensile strength (UTS/density) of various collar materials;
**FIG. 4** is a perspective view of an embodiment of a plurality of hybrid collars installed on a carbon fiber reinforced plastic (CFRP) structure;
**FIG. 5** is a micrograph showing a functional gradient microstructure of hybrid collar achieved by in-situ cold working during fastener installation;
**FIG. 6** is a graph illustrating the tensile strength of an aluminum hybrid collar versus a titanium collar showing equivalent ultimate strength; and
**FIG. 7** are perspective views of an embodiment of hybrid collars tested with composite plate after salt spray corrosion testing.

### Best Mode for Carrying Out the Invention

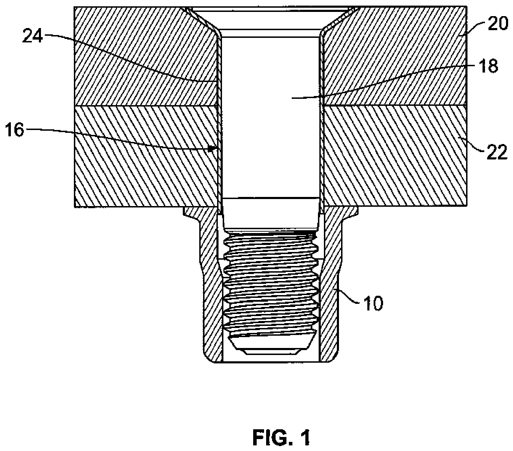

In an embodiment, a hybrid collar **10** is adapted to prevent galvanic corrosion and reduce weight as compared to a conventional titanium lockbolt collar. The collar **10** combines a collar body **12** with a galvanically compatible base element **14**. In an embodiment, the collar **10** is a lockbolt collar with a controlled swaging feature and used in a fastener assembly **16** having a threaded pin **18** as illustrated in **FIG. 1**, for fastening a plurality of workpieces **20**, **22.** In an embodiment, the fastener assembly **16** includes a sleeve **24** inserted into aligned holes of the workpieces **20**, **22**, and is sized and shaped to receive the pin **18**. In an embodiment, the collar **10** is used in connection with aerospace applications, such as aircraft. In other embodiments, the collar **10** can be used in other applications and fields.

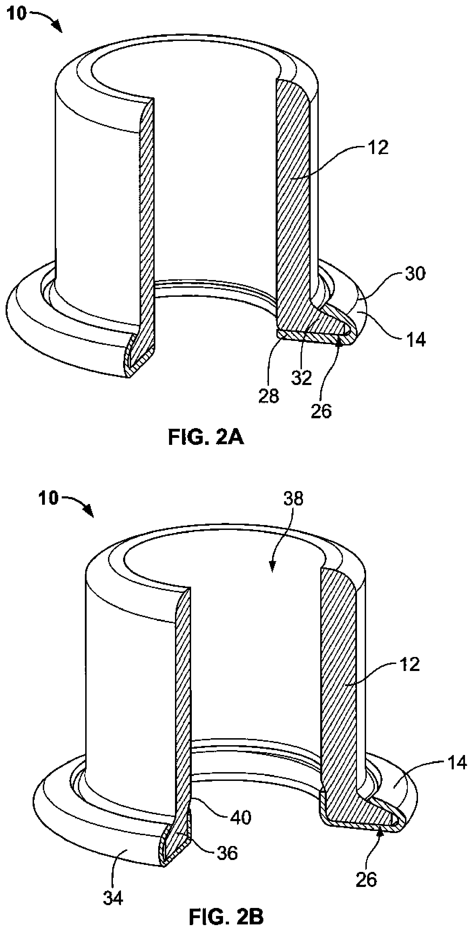

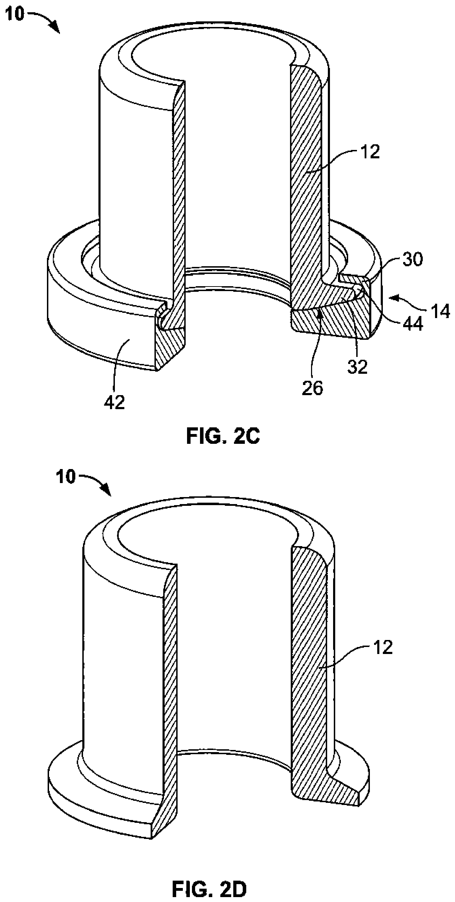

Referring to **FIGS. 2A** through **2C**, the collar **10** includes the collar body **12**, which is relatively soft and deformable, and a galvanically compatible base element **14.** In an embodiment, the base element **14** is a washer which is suitable for composite structures, as shown in **FIGS. 2A** through **2C**. In another embodiment, the collar **10** includes only the soft, deformable collar body **12**, as shown in **FIG. 2D**, which is suitable for metallic structures.

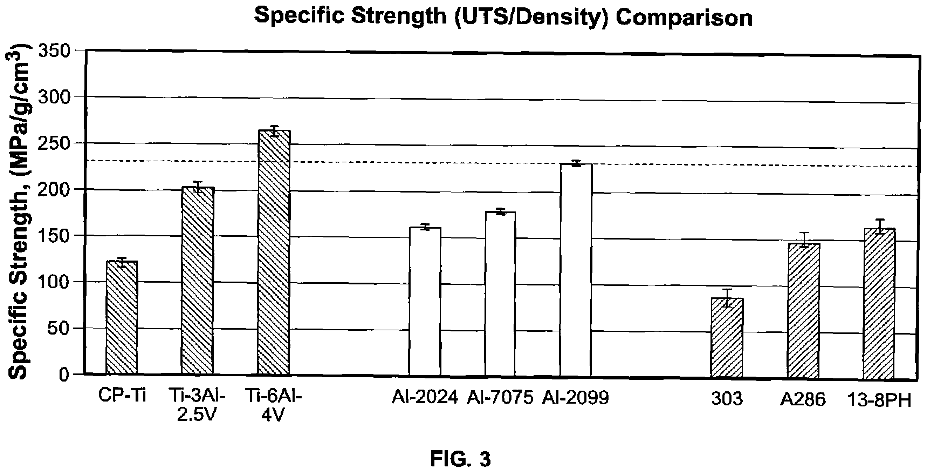

In a number of embodiments, materials for the soft, deformable collar body **12** may include, but are not limited to, aluminum and its alloys, such as 2099, 7075, 2024 and 6061. **FIG. 3** is a graph showing a comparison of specific tensile strength (UTS/density) of various collar materials. In particular, in an embodiment, the graph shows that the specific tensile strength of aluminum 2099 compares favorably with other materials used to make collars.

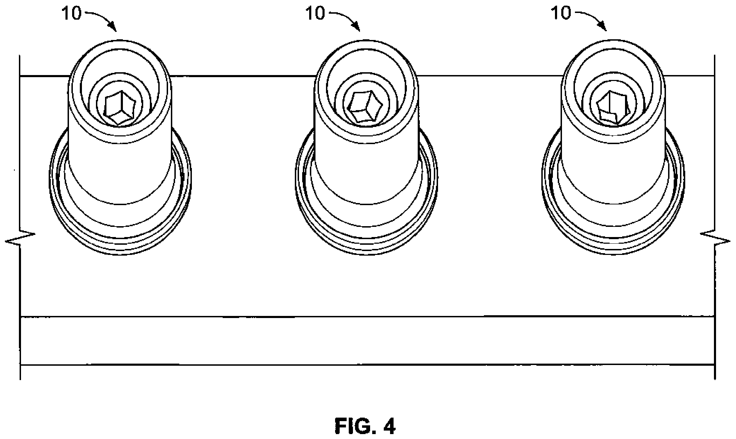

**FIG. 4** illustrates an embodiment of a plurality of the collars **10** installed on a carbon fiber reinforced plastic (CFRP) workpiece.

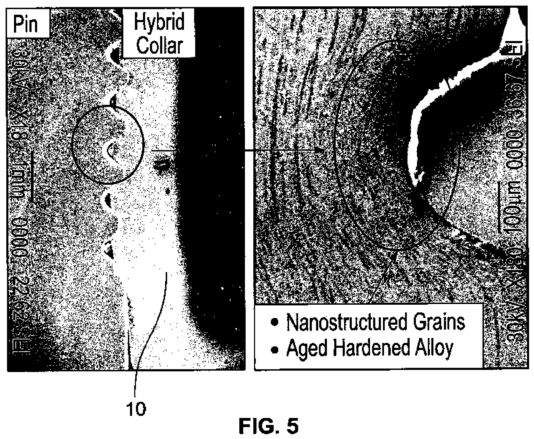

In an embodiment, the collar **10** may have a nano-grain structure achieved by cold working the collar **10** via in-situ forming process during fastener installation and creating a functional gradient material (FGM), as shown in **FIG. 5**. In an embodiment, this gradient in microstructure results in gradient in properties across the collar's **10** cross section and provides the necessary functional properties, namely, high tensile and shear strength approximately equal to those of titanium collars and higher corrosion resistance. In an embodiment, the degree of the cold working of the collar **10** is also controlled by varying an outside diameter of the collar **10** to provide a specified amount of deformed structure. In an embodiment, the specified collar outside diameter dimension for the collar's **10** size maintains the critical deformation needed for improved performance, but keeps it below levels that may lead to unintended cracking of the collar **10** during installation. In other embodiments, the FGM in other types of fasteners such as frangible collars, can be created by other means of cold working, such thread tapping or thread rolling operations.

In other embodiments, the collar **10** includes a coating comprising a combination of organic materials and non-conductive fillers. In an embodiment, the organic material of the coating can include the family of polymers, such as epoxies, and the non-conductive fillers can include aluminum pigmented or chromated paints and the family of sol-gel coatings. In one embodiment, the coating can be applied to every portion of the collar **10**, specifically to the collar body **12**. In other embodiments, the coating can be applied on the collar body **12** selectively, depending on desired joint performance. In another embodiment, the outer surface of the collar body **12** can include a coating comprised of a first material, and the inner surface of the collar body **12** can include a coating comprised of second material different from the first material.

In an embodiment, the collar **10** is electrically isolated from more noble structures, such as composite, by use of the close fitting base element **14**, such as a captive washer inserted under and covering a bearing surface **26** of the collar body **12**. In an embodiment, the base element **14** can be selected from a group of metallic materials which are known to be galvanically compatible to a composite structure. In an embodiment, these materials include steel, titanium, and their alloys. In other embodiments, other alloys and non-metallic materials may be used.

in an embodiment, the base element **14** not only provides protection from galvanic corrosion between the collar **10** and the CFRP structure, but plays an important role as one of the critical structural elements of the fastener system **16**. In an embodiment, as shown in **FIG. 2A**, the base element **14** includes a flat base **28** that covers the bearing surface **26** of the collar body **12** and a securing portion **30** that is crimped and secured to a flange **32** of the collar body **12**. In an embodiment, the securing portion **30** is angled obliquely relative to the base **28**. In another embodiment, as shown in **FIG. 2B**, the base element **14** includes a ridge base **34** similar in structure to the base element **14** shown in **FIG**. **2A**, but includes a sealing portion **36** that extends into the aperture **38** of the collar body **12** and partially covers an inner wall **40** thereof. In an embodiment, the sealing portion **36** acts as a seal for preventing moisture and other external elements from infiltrating the aperture **38** of the collar body **12**. In another embodiment, as shown in **FIG. 2C**, the base element **14** includes a swivel base element **42**, whereby a gap **44** or clearance is formed between the flange **32** of the collar body **12** and the securing portion **30**, thereby allowing the swivel base element **42** to rotate relative to the collar body **12**, and vice-versa. In an embodiment, the aforedescribed base elements **14** are rigid, and, therefore, they can accommodate any possible hole misalignment during fastener installation, thereby creating a self-aligning fastener. In an embodiment, in instances where the hole(s) of the workpieces **20**, **22** is oversized or misaligned, the base element **14** fills any gaps between the holes and the pin **18** and assists in aligning the pin **18**.

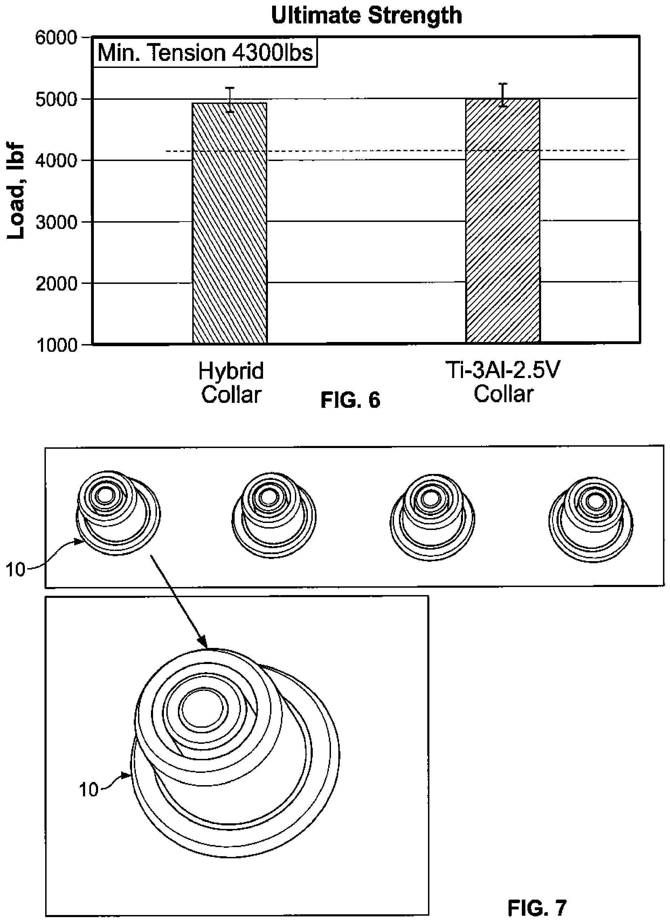

In an embodiment, the base element **14** mitigates composite bearing deformation when the collar **10** is used in a composite structure. In an embodiment, the base element **14** enables the collar body **12** to form during installation without direct contact with the structure. As a result, this prevents deformation (i.e., surface friction) of the collar **10** from translating into the structure.
In an embodiment, the collar 10 is galvanically compatible for both metallic and composite structure applications, is lighter in weight, and is less expensive as compared to titanium fasteners, and have comparable strength to titanium fasteners, as shown in the graph of FIG. 6. In an embodiment, the collar 10 is about 30% to 50% lighter than comparable titanium collars, due to the lower density of the materials used for the collar body 12. In another embodiment, the collar 10 is about 40% lighter than comparable titanium collars.
FIG. 7 illustrates an embodiment of a plurality of the collars 10 tested with a composite plate after salt spray corrosion testing. In an embodiment, the collars 10 show no evidence of any galvanic corrosion after a 250 hour salt spray exposure.
It will be understood that the embodiments described herein are merely exemplary and that a person skilled in the art may make many variations and modifications. For instance, in an embodiment, the collar 10 can be a threaded member. In an embodiment, the collar 10 may be a lightly threaded collar having internal threads for aligning it on the threaded portion of the pin 18 and, thereafter, the collar 10 can be swaged onto the pin 18. In other embodiments, the collar 18 may include a single thread for the aforesaid alignment purposes, as disclosed in U.S. Patent No. 4,867,625 to Dixon.
In another embodiment, the collar body 12 of the collar 10 may be a two-piece element, such that the elongated, tubular member of the collar body 12 is made from a soft, deformable material, such as aluminum and its alloys as described above, and the flange is made from a galvanically compatible material, such as titanium, steel, and their alloys as described above, and in which the tubular member and the flange are attached to one another. In one or more embodiments, the tubular member and the flange are attached to one another by friction welding, adhesives, or other suitable attachment means known in the art.

## Claims

1. A collar (10), comprising a collar body (12) having a first end, a second end opposite the first end, and a flange (32) located at the second end and having a bearing surface (26), wherein the collar (10) further comprises a base element (14) attached to the collar body (12), the base element (14) including a base portion (28) that covers the bearing surface (26) of the collar body (12), and a securing portion (30) that is joined to the flange (32) of the collar body (12), **characterized in that** the collar body (12) is made from a first material and the base element (14) is made from a second material that is galvanically compatible with the first material; or
**in that** the collar body (12) is made from a first material and the flange (32) is made from a second material that is galvanically compatible with the first material.

2. The collar (10) of claim 1, wherein the first material is selected from the group consisting of aluminum and aluminum alloys.

3. The collar (10) of claim 1 or 2, wherein the second material is selected from the group consisting of steel, steel alloys, titanium, and titanium alloys.

4. The collar (10) of one of the claims 1 to 3, wherein the securing portion (30) of the base element (14) is crimped on the flange (32) of the collar body (12).

5. The collar (10) of one of the claims 1 to 4, wherein the collar body (12) includes an aperture (38) extending from the first end to the second end thereof and forming an inner wall (40), and wherein the base element (14) includes a sealing portion (36) that extends into the aperture (38) of the collar body (12) and covers a portion of the inner wall (40).

6. The collar (10) of one of the claims 1 to 5, wherein the base element (14) includes a swivel base element (42) that is adapted to rotate relative to the collar body (12).

7. The collar (10) of one of the claims 1 to 6, wherein the collar (10) is adapted to be installed on a structure made of a composite material.

8. The collar (10) of one of the claims 1 to 7, further comprising a coating that includes an organic material and a non-conductive filler.

9. The collar (10) of claim 8, wherein the organic material is a polymer material, and the non-conductive filler is selected from the group consisting of aluminum pigmented paint, chromated paint, and sol-gel coatings.

10. The collar (10) of claim 8 or 9, wherein the coating is applied to every portion of the collar body (12).

11. The collar (10) of claim 8 or 9, wherein the coating is be applied on the collar body (12) selectively.

12. The collar (10) of one of the claims 1 to 11, wherein the collar (10) is a threaded collar.

13. The collar (10) of one of the claims 1 to 11, wherein the collar (10) is a swage collar.

14. The collar (10) of one of the claims 1 to 13, wherein the collar body (12) and the flange (32) are formed integrally with one another.

## Patentansprüche

1. Kragen (10), welcher einen Kragenkörper (12) aufweist, welcher ein erstes Ende, ein zweites Ende gegenüberliegend zu dem ersten Ende, und einen Flansch (32) aufweist, welcher an dem zweiten Ende angeordnet ist und eine Lageroberfläche (26) aufweist,
wobei der Kragen (10) ferner ein Basiselement (14) aufweist, welches an dem Kragenkörper (12) angebracht ist, wobei das Basiselement (14) einen Basisbereich (28), welcher die Lageroberfläche (26) des Kragenkörpers (12) bedeckt, und einen Sicherungsbereich (30) aufweist, welcher mit dem Flansch (32) des Kragenkörpers (12) verbunden ist,
**dadurch gekennzeichnet, dass**
der Kragenkörper (12) aus einem ersten Material hergestellt ist und das Basiselement (14) aus einem zweiten Material hergestellt ist, welches galvanisch kompatibel mit dem ersten Material ist; oder
dadurch, dass der Kragenkörper (12) aus einem ersten Material hergestellt ist und der Flansch (32) aus einem zweiten Material hergestellt ist, welches galvanisch kompatibel mit dem ersten Material ist.

2. Kragen (10) nach Anspruch 1,
wobei das erste Material aus einer Gruppe ausgewählt wird, welche aus Aluminium und Aluminiumlegierungen besteht.

3. Kragen (10) nach Anspruch 1 oder 2,
wobei das zweite Material aus einer Gruppe ausgewählt wird, welche aus Stahl, Stahllegierungen, Titan und Titanlegierungen besteht.

4. Kragen (10) nach einem der Ansprüche 1 bis 3,
wobei der Sicherungsbereich (30) des Basiselements (14) auf den Flansch (32) des Kragenkörpers (12) gepresst ist.

5. Kragen (10) nach einem der Ansprüche 1 bis 4,
wobei der Kragenkörper (12) eine Öffnung (38) aufweist, welche sich von dem ersten Ende zu dem zweiten Ende hiervon erstreckt und eine innere Wand (40) ausbildet, und wobei das Basiselement (40) einen Dichtbereich (36) aufweist, welcher sich in die Öffnung (38) des Kragenkörpers (12) hineinerstreckt und einen Bereich der inneren Wand (40) abdeckt.

6. Kragen (10) nach einem der Ansprüche 1 bis 5,
wobei das Basiselement (14) ein drehbares Basiselement (42) aufweist, welches dazu ausgebildet ist, sich relativ zu dem Kragenkörper (12) zu drehen.

7. Kragen (10) nach einem der Ansprüche 1 bis 6,
wobei der Kragen (10) dazu ausgebildet ist, an eine Struktur montiert zu werden, welche aus einem Verbundwerkstoff hergestellt ist.

8. Kragen (10) nach einem der Ansprüche 1 bis 7,
welcher ferner eine Beschichtung aufweist, welche ein organisches Material und einen nicht leitfähigen Füllstoff aufweist.

9. Kragen (10) nach Anspruch 8,
wobei das organische Material ein Polymermaterial ist, und der nicht leitfähige Füllstoff aus einer Gruppe ausgewählt wird, welche aus Aluminium pigmentierter Farbe, chromierter Farbe, und Sol-gel Beschichtungen besteht.

10. Kragen (10) nach Anspruch 8 oder 9,
wobei die Beschichtung auf alle Bereiche des Kragenkörpers (12) aufgetragen ist.

11. Kragen (10) nach Anspruch 8 oder 9,
wobei die Beschichtung selektiv auf dem Kragenkörper (12) aufgebracht ist.

12. Kragen (10) nach einem der Ansprüche 1 bis 11,
wobei der Kragen (10) ein Gewindekragen ist.

13. Kragen (10) nach einem der Ansprüche 1 bis 11,
wobei der Kragen (10) ein Stauchkragen ist.

14. Kragen (10) nach einem der Ansprüche 1 bis 13,
wobei der Kragenkörper (12) und der Flansch (32) integral miteinander ausgebildet sind.

## Revendications

1. Collier (10) comprenant un corps de collier (12) ayant une première extrémité, une seconde extrémité opposée à la première extrémité, et une bride (32) située à la seconde extrémité et ayant une surface d'appui (26), dans lequel
le collier (10) comprend en outre un élément de base (14) attaché au corps de collier (12), l'élément de base (14) incluant une portion de base (28) qui couvre la surface d'appui (26) du corps de collier (12), et une portion de fixation (30) qui est unie à la bride (32) du corps de collier (12),
**caractérisé en ce que**
le corps de collier (12) est fait d'un premier matériau et l'élément de base (14) est fait d'un second matériau qui est compatible sur le plan galvanique avec le premier matériau; ou
**en ce que** le corps de collier (12) est fait d'un premier matériau et la bride (32) est faite d'un second matériau qui est compatible sur le plan galvanique avec le premier matériau.

2. Collier (10) selon la revendication 1,
dans lequel le premier matériau est sélectionné parmi le groupe comprenant aluminium et alliages d'aluminium.

3. Collier (10) selon la revendication 1 ou 2,
dans lequel le second matériau est sélectionné parmi le groupe comprenant acier, alliages d'acier, titane et alliages de titane.

4. Collier (10) selon l'une des revendications 1 à 3,
dans lequel la portion de fixation (30) de l'élément de base (14) est sertie sur la bride (32) du corps de collier (12).

5. Collier (10) selon l'une des revendications 1 à 4,
dans lequel le corps de collier (12) inclut une ouverture (38) s'étendant depuis la première extrémité jusqu'à la seconde extrémité de celui-ci et formant une paroi intérieure (40), et dans lequel l'élément de base (14) inclut une portion d'étanchement (36) qui s'étend jusque dans l'ouverture (38) du corps de collier (12) et qui couvre une portion de la paroi intérieure (40).

6. Collier (10) selon l'une des revendications 1 à 5,
dans lequel l'élément de base (14) inclut un élément de base pivotant (42) qui est adapté à tourner par rapport au corps de collier (12).

7. Collier (10) selon l'une des revendications 1 à 6,
dans lequel le collier (10) est adapté à être installé sur une structure faite d'un matériau composite.

8. Collier (10) selon l'une des revendications 1 à 7,
comprenant en outre un revêtement qui inclut un matériau organique et une charge non conductrice.

9. Collier (10) selon la revendication 8,
dans lequel le matériau organique est un matériau polymère, et la charge non conductrice est sélectionnée parmi le groupe comprenant une peinture pigmentée à l'aluminium, une peinture colorée, et des revêtements sol/gel.

10. Collier (10) selon la revendication 8 ou 9,
dans lequel le revêtement est appliqué à toutes les portions du corps de collier (12).

11. Collier (10) selon la revendication 8 ou 9,
dans lequel le revêtement est appliqué sur le corps de collier (12) de façon sélective.

12. Collier (10) selon l'une des revendications 1 à 11,
dans lequel le collier (10) et un collier vissé.

13. Collier (10) selon l'une des revendications 1 à 11,
dans lequel le collier (10) est un collier serti.

14. Collier (10) selon l'une des revendications 1 à 13,
dans lequel le corps de collier (12) et la bride (32) sont formés intégralement l'un avec l'autre.
